# EUROPEAN PATENT APPLICATION

(11) **EP 0 955 125 A2**
(43) Date of publication of application: **10.11.1999**
(21) Application number: 99108521.8
(22) Date of filing: 04.05.1999
(51) Int. Cl.: B23Q 11/10, B23Q 11/00

(54) **Cutting tool**

(30) Priority: 07.05.1998 JP 12503198; 16.06.1998 JP 16893798; 16.06.1998 JP 16893898
(71) Applicant: MITSUBISHI MATERIALS CORPORATION, Chiyoda-ku, Tokyo 100 (JP)
(72) Inventor: Arai, Tatsuo, c/o Tsukaba Plant, Ishige-machi, Yuuki-gun, Ibaraki-ken (JP); Shimomura, Hiroshi, c/o Tsukuba Plant, Ishige-machi, Yuuki-gun, Ibaraki-ken (JP)
(74) Representative: HOFFMANN - EITLE

(57) **Abstract**

A cutting tool for use on a machine tool, such as a face milling cutter, has a rotationally-driven tool body (11) and a plurality of cutting tips (13) mounted on the tool body. The cutting tool has a chip receiver (22) surrounding and encasing the cutting edges (13a) of the cutting tips carried by the rotational tool body, for receiving chips of metal generated as a result of the machining. The chip receiver has a chip discharge opening which may be connected to a vacuum suction means for promoting the discharge of the chips. A cutting medium in the form of a mist (m) of a cutting oil or chilled air is supplied to a region (R) near the cutting edges and the surface of a workpiece (w) which is being machined, via cutting medium discharge bores (26) and openings (26a) provided in the end extremity of the chip receiver or in the tool body. A colorant is mixed with the mist of the cutting oil, or light rays are applied to the mist, to visualize the mist of the cutting oil, thereby enabling adjustment to ensure that the cutting oil mist is correctly and stably directed to the target region.

## Description

### BACKGROUND OF THE INVENTION

A face milling cutter, as an example of cutting tools of the type having cutting edges provided on a tool body, has been known as disclosed in Japanese Unexamined Patent Application Publication No. 3-281114.

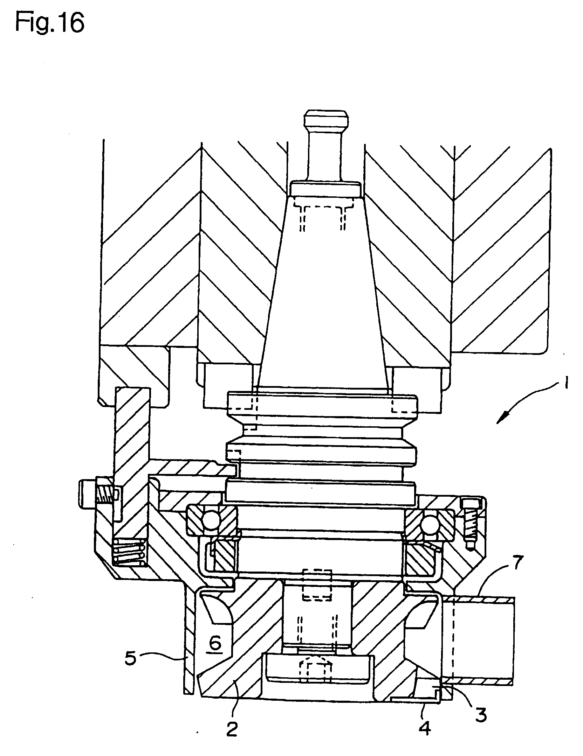

As will be seen from Fig. 16, this face milling cutter 1 has a tool body 2 and a plurality of cutting tips 3 attached to peripheral portions of an end of the tool body 2 at a predetermined circumferential interval. Guide members 4 for guiding shavings or metal chips generated as a result of the cutting are attached to the tool body 2 so as to face the rake surfaces of the end cutting edges and outer peripheral cutting edges of the respective cutting tips 3. At the same time, a substantially cylindrical member 5 serving as a receiver for receiving the chips is held coaxially with the tool body 2 such that chip receiving spaces 6 are formed between the inner peripheral surface of the chip receiver 5 and the outer peripheral surface of the tool body 2 and such that the tool body 2 is rotatable relative to the chip receiver 5.

In operation of the face milling cutter 1, chips generated by the end cutting edge and the outer peripheral edge of each tip 3 are forcibly introduced into the chip receiver 5 via the gap formed between the chip guide member 4 and the rake surfaces of the tip 3. The chips are then urged towards the inner peripheral surface of the chip receiver 5 and are discharged through a discharge port 7 so as to be collected in, for example, a collecting box which is not shown.

This arrangement serves to prevent uncontrolled scattering of the chips, thus contributing to improvement in the working environment, while avoiding problems such as breakage of the cutting tool and damaging of the workpiece surface which tends to occur due to jamming of chips between the cutting edges and the workpiece.

Cutting by a face milling cutter requires supply of a cutting oil for various purposes such as lubrication of the rake surface and relief surface of the tip, cooling of the tool and the workpiece, removal of stagnant fine chips, protection, and rust-prevention of the finished surface of the workpiece.

Hitherto, problems have been encountered such as impairment of the working environment due to scattering of the cutting oil, necessity of costly disposal of waste oil, and so on, due to the use of the cutting oil which is in liquid phase.

The cutting oil in liquid state is supplied externally into the chip receiver 5 through a hose or the like. This involves a risk that the tips of the cutting tool and the surface of the workpiece that are encased in the chip receiver 5 are not stably supplied with the cutting oil.

### SUMMARY OF THE INVENTION

Accordingly, an object of the present invention is to improve the working environment, while reducing the cost incurred for the disposal of wasted oil.

Another object of the present invention is to ensure that a misty cutting medium or chilled air is supplied to a region around the tips of the cutting tool without being scattered.

To these ends, according to the invention, there is provided a cutting tool comprising a tool body having a cutting edge and rotatable about its axis, and cutting medium supplying means for supplying an atomized cutting oil or chilled air to a region near the cutting edge.

In accordance with a preferred mode of the present invention, the cutting tool may further comprise a chip receiver mounted coaxially with the tool body so as to cover the outer peripheral surface of the tool body in such a manner as to allow relative rotation between the tool body and the chip receiver, wherein the chip receiver has a chip discharge opening through which chips introduced into a space between the inner peripheral surface of the chip receiver and the outer peripheral surface of the tool body are discharged, the chip receiver further having at least one cutting medium discharge bore, for discharging the cutting oil in the form of a mist or chilled air from an end thereof.

According to this arrangement, air in a chip reservoir space is discharged from the chip discharge opening, due to the effect of the swirl generated as a result of the rotation of the tool body, whereby reduced pressure is established inside the chip reservoir space. Therefore, the mist of the cutting oil or the chilled air discharged from the end of the chip receiver is induced towards the inner peripheral surface of the chip receiver, so as to be stably supplied to the surface of the workpiece or the cutting edges, without being scattered to the environment.

In accordance with another preferred mode of the present invention, the cutting tool may further comprise a chip receiver mounted coaxially with the tool body so as to cover the outer peripheral surface of the tool body in such a manner as to allow relative rotation between the tool body and the chip receiver, wherein the chip receiver has a chip discharge opening through which chips introduced into a space between the inner peripheral surface of the chip receiver and the outer peripheral surface of the tool body are discharged, and wherein the tool body has at least one cutting medium discharge bore opening in one end thereof at a location near the cutting edge, for discharging the cutting oil in the form of a mist or chilled air.

With this arrangement, the cutting medium such as the mist of the cutting oil or the chilled air is discharged from a portion of the end surface of the tool body near the cutting edge, through the cutting medium discharge bore formed in the tool body. It is therefore possible to stably supply the cutting medium to the cutting edge and the machined surface of the workpiece, while any surplus cutting medium is collected through the chip discharge opening without being scattered to the environment.

In accordance with still another preferred mode of the present invention, the cutting tool may comprise visualizing means that makes the mist of the cutting oil or the chilled air visible.

This arrangement enables easy visual recognition of the oil mist or the chilled air, thus allowing easy confirmation of the state of the supply of the oil mist or the chilled air, as well as the reach of the same.

### BRIEF DESCRIPTION OF THE DRAWINGS

Fig. 1 is a sectional view of a face milling cutter in accordance with a first embodiment of the present invention, showing particularly a critical portion thereof;
Fig. 2 is a longitudinal sectional view of the face milling cutter of Fig. 1, showing the entirety of the cutter;
Fig. 3 is an end view of the face milling cutter shown in Fig. 1;
Fig. 4 is an enlarged sectional view of a critical portion of a modification of the face milling cutter shown in Fig. 1;
Fig. 5 is an enlarged sectional view of a critical portion of a face milling cutter in accordance with a second embodiment of the present invention;
Fig. 6 is a sectional view of a face milling cutter in accordance with a third embodiment of the present invention;
Fig. 7 is a plan view of the face milling cutter shown in Fig. 6;
Fig. 8 is a sectional view of a face milling cutter in accordance with a fourth embodiment of the present invention;
Fig. 9 is a sectional view of a face milling cutter in accordance with a fifth embodiment of the present invention;
Fig. 10 is an end view of a face milling cutter shown in Fig. 9;
Fig. 11 is a sectional view of a critical portion of a face milling cutter in accordance with a sixth embodiment of the present invention;
Fig. 12 is an enlarged view of a portion of the face milling cutter shown in Fig. 11;
Fig. 13 is a block diagram illustrating a step of coloring a cutting oil by a visualizing means employed in a seventh embodiment of the present invention;
Fig. 14 is a block diagram illustrating a step of coloring a mixture of oil mist and air by a visualizing means employed in an eighth embodiment of the present invention;
Fig. 15 is a block diagram illustrating a step of mixing a colored smoke in chilled air by a visualizing means employed in a ninth embodiment of the present invention; and
Fig. 16 is a sectional view of a conventional face milling cutter.

### DESCRIPTION OF THE PREFERRED EMBODIMENTS

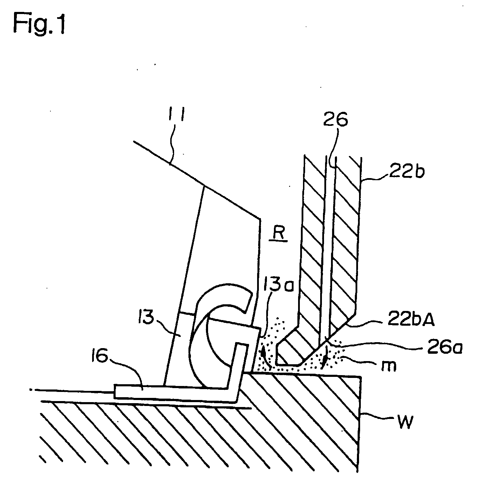

A description will now be given of a face milling cutter in accordance with a first embodiment of the present invention, with specific reference to Figs. 1 to 3.

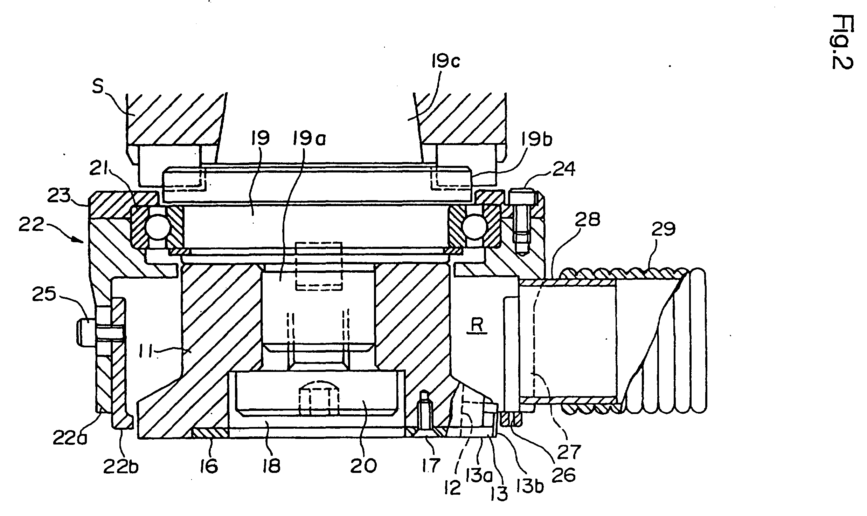

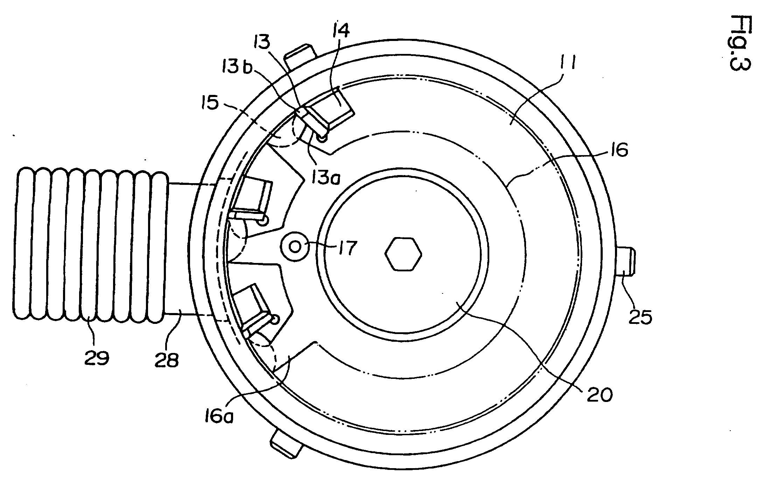

Referring to Figs. 2 and 3, a tool body 11 has a generally cylindrical form with a reduced-diameter end. A plurality of tip-mounting seats 12 are formed in the outer peripheral edge at an axial end of the tool body 11, so as to open radially outward and also to open in the axial end surface, at a predetermined circumferential pitch.

A throw-away tip (referred to simply as a "tip", hereinafter) 13 is detachably seated on and fixed to each tip-mounting seat 12 by means of a clamping mechanism 14. A face cutting edge 13a is formed on a ridge of the tip 13 projecting from the end of the tool body 11, while an outer peripheral cutting edge 13b is formed on a ridge of the tip 13 projecting beyond the outer peripheral end of the tool body 11. Referring to Fig. 3, a tip pocket 15, having the force of a recess opening in arcuate forms both in the axial end surface and outer peripheral end surface of the tool body 12, is formed in the end of the tool body 11 at a position ahead of each tip 13 as viewed in the direction of rotation of the cutting tool. A chip guide member 16, adapted for guiding the chips generated by the cutting edges 13a, 13b into chip reservoir spaces which will be described later, is embedded in the axial end of the tool body 11 and is fixed thereto by means of countersunk screws 17.

The chip guide member 16 has a flat annular form. Hook-shaped projections 16a of a number equal to the number of the tips 13 are formed on the outer periphery of the chip guide member 16. Each hook-shaped projection 16a is disposed so as to oppose the rake surface of the associated tip 13 leaving a slight gap therebetween, so as to guide chips generated by the cutting edges 13a, 13b into the chip reservoir space R.

Numeral 18 denotes a mounting hole that is coaxial with the tool body 11. A stem portion 19a of an arbor 19 is inserted into the mounting hole 18 from the smaller-diameter end (upper end as viewed in Fig. 2) of the tool body 11. A fastening bolt 20 is screwed into the stem 19a, thereby fixing the tool body 11 to the arbor 19.

A taper shank 19c is provided on the end of the arbor 19 opposite to the stem 19a. The taper shank 19c is adapted to be chucked on a spindle S of a machine tool, whereby the tool body 11 is fixed to the machine tool.

The stem 19a of the arbor 19 has a large-diameter journal portion 19b to which is fixed a bearing 21. A fixed part 22a of a chip receiver 22 (simply referred to as a "fixed part 22a") has an upper end portion that fits on the outer race of the bearing 21. The fixed part 22a is fixed by means of bolts 24 to a cover 23 that is secured to the outer race of the bearing 21, whereby relative rotation is allowed between the tool body 1 and the fixed part 22a about the axis of the tool body 11.

The chip receiver 22 also has a movable part 22b (simply referred to as a "movable part 22") which also has a cylindrical form and which is telescopically received in the fixed portion 22a so as to be slidingly adjustable up and down along the inner peripheral surface of the fixed part 22a. The movable part 22b is secured by means of a bolt 25 to the fixed part 22a such that the end extremity of the movable part 22b is retracted axially inward (upward as viewed in Fig. 2) from a level of the cutting depth of the outer peripheral cutting edge 13b of the tip 13.

As will be seen from Fig. 1, the movable part 22b is contracted radially inward at the lower end thereof, so that the diameter of the inner peripheral surface of the movable part 22b is slightly greater than the circle formed by the locus of the outer peripheral cutting edge 13b. A plurality of oil passage bores 26 are formed in the wall of the movable part 22b so as to extend axially linearly, at a regular interval in the circumferential direction.

More specifically, the lower end portion of the movable part 22b is bent radially inward such that the inner and outer diameters progressively decrease towards the lower end extremity. Thus, the outer peripheral surface of the movable part 22 is tapered at the lower end portion of the movable part 22 as at 22A in which the oil passage bores 26 open to present discharge ports 26a.

Thus, the fixed part 22a and the movable part 22b in combination provide the chip receiver 22 which covers the tool body 11 and the outer peripheral cutting edges 13b, from the upper side of the tool body 11. The inner peripheral surface of the chip receiver 22 and the outer peripheral surface of the reduced-diameter portion of the tool body 11 cooperate with each other in defining therebetween the chip reservoir space R to which chips are introduced via the tip pockets 15.

The chip receiver 22 is provided with a chip discharge opening 27 which penetrates the wall thereof. A connecting pipe 28 fits at its one end in the chip discharge opening 27.

A duct hose 19 has one end fitting on the other end of the connecting pipe 28 and the other end that is connected to a suction device (not shown) for inducing air from the chip reservoir space R.

A hose (not shown) is connected to the chip receiver 22. Oil mist m generated by an oil mist generator (not shown) is introduced through this hose into the oil passage bores 26.

The mist generating device atomizes a trace amount of cutting oil (preferably a vegetable oil) into uniform micro-fine particles and mixes these particles with a large volume of air supplied through an air intake opening, thereby forming the oil mist m that is jetted from a mist outlet.

The oil mist m can flow even into tiny gaps and, in addition, much greater area on an object is wetted with oil than in the case where a liquid cutting oil is supplied, thereby offering greater cooling and lubricating effects. Furthermore, since only a trace amount of oil mist m is used, the quantity of wasted oil to be collected is almost nullified advantageously.

In order that a workpiece w is milled by the face milling cutter having the described construction, the tool body 11 is chucked on a machine tool and then the workpiece w is fixed on a working platform such that the surface to be milled is normal to the axis of the spindle S of the machine tool.

Then, the spindle S is axially fed or the platform is axially moved so that the cutting tool cuts into the surface of the workpiece w, while the spindle S or the platform is moved in a direction that orthogonally crosses the axis of the spindle S.

Consequently, the surface of the workpiece w is cut by the face cutting edge 13a and the outer peripheral cutting edge 13b, as illustrated in Fig. 1.

The chips generated as a result of the cutting are introduced into the tip pockets 15 via the gap between the rake surface of the tip 13 and the end surface of the hooked projection 16a of the chip guide member 16 and further into the chip reservoir space R via the tip pockets 15. The chips are then sucked and collected into the suction device through the connecting pipe 28 and the duct hose 29.

The pressure in the chip reservoir space R is reduced due to the effect of the swirl generated as a result of rotation of the tool body 11 and the effect of the suction generated by the suction device, so that the oil mist m discharged from the end of the chip receiver 22 is induced towards the inner peripheral surface of the chip receiver 22, so as to wet the surface of the work w, as well as the cutting edges 13a, 13b, thereby producing large lubricating and cooling effects.

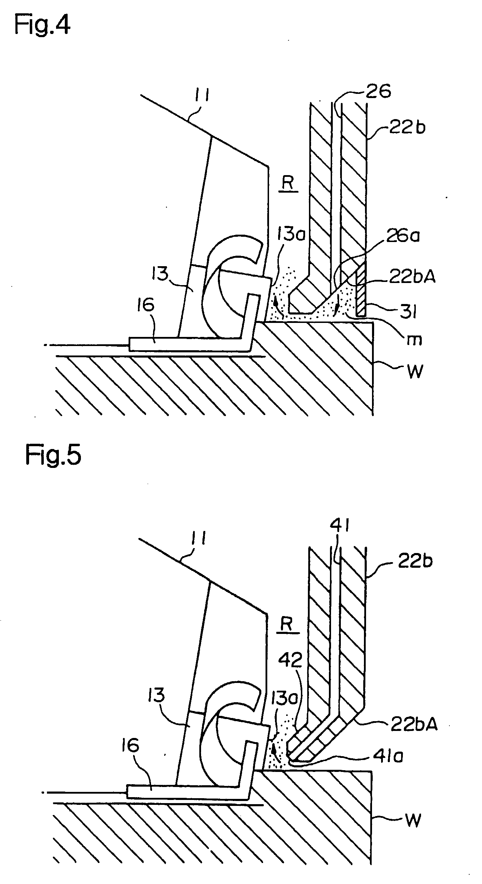

A description will now be given of a modification of the face milling cutter, with specific reference to Fig. 4. In this Figure, parts or components that are he same as those of the first embodiment are denoted by the same reference numerals as those used in the description of the first embodiment, and detailed description of such parts or components is omitted.

This modification features an annular anti-scattering member 31 attached to the outer peripheral surface 22bA of the chip receiver 22 (specifically the lower end of the movable part 22b). The anti-scattering member 31 is attached to the surface of the chip receiver 22 in which the oil discharge ports open, i.e., in the outer peripheral surface 22bA of the axial end portion of the chip receiver 22, at a position radially outside the oil discharge ports 26a communicating with the oil passage bores 26, whereby the outer peripheral wall of the movable part 22b is materially extended axially outward (downward as viewed in Fig. 4).

Thus, the described modification of the face milling cutter employs the anti-scattering member 31 that extends along the outer peripheral surface of the movable part 22b so as to cover the discharge ports 26a. The anti-scattering member 31 effectively prevents the oil mist m from scattering radially outward, even when the discharged oil mist m tends to spread conically from the oil discharging ports 26a, while ensuring sufficiently large rate of supply of the mist to the workpiece surface and the cutting edges 13a, 13b.

In the described modification of the first embodiment, the anti-scattering member 31 is formed as a separate member from the movable part 22 and then fixed to the latter by means of welding, bolts or the like. This, however, is only illustrative and the anti-scattering member 31 may be formed as an integral part of the movable member 22b. The annular form of the anti-scattering member 31 also is illustrative, and the anti-scattering member 31 may be substituted by a plurality of arcuate baffle plates that are arranged at positions corresponding to the positions of the oil discharge ports 26a.

A second embodiment of the present invention will now be described with reference to Fig. 5. In this Figure, the same reference numerals as those employed in the description of the first embodiment are used to denote parts or components that are the same as or equivalent to those of the first embodiment, and detailed description of such parts or components is omitted.

The face milling cutter of the second embodiment features that the oil discharge ports 41a leading from the oil passage bores 41 are directed towards the tool body 11, unlike the first embodiment in which the oil passage bores 26 have discharge ports 26a that open in the outer peripheral surface 22bA of the end portion of the chip receiver 22 (movable part 22b).

More specifically, in this embodiment, the oil passage bores 22b extends radially and linearly over a predetermined length from the base end of the movable part 22b towards the end extremity of the same. The oil passage bores are then bent along the lower end portion 42 of the movable part 22b that is bent radially inward such that the inner and outer peripheral surfaces of the movable part 22b progressively decrease towards the end extremity of the movable member 22b. The oil discharge ports 41a then open in the end extremity of the lower end portion 42 of the movable part 22b.

In the face milling cutter of the second embodiment, the oil mist m is atomized in a region closer to the cutting edges 13a, 13b and the cut surface of the work piece than in the first embodiment, thus offering higher efficiency of supply of the oil mist to the cut surface an the cutting edges 13a, 13b, as well as high efficiency of suction and collection of the cutting oil.

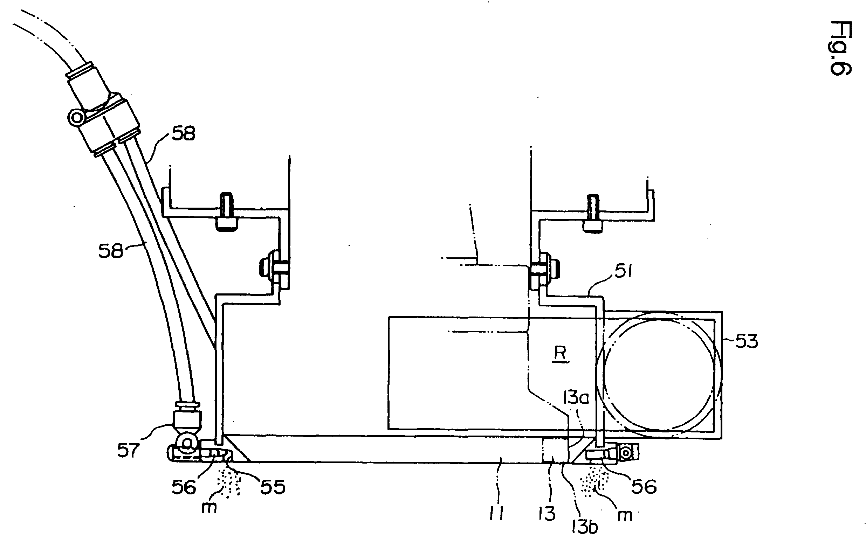

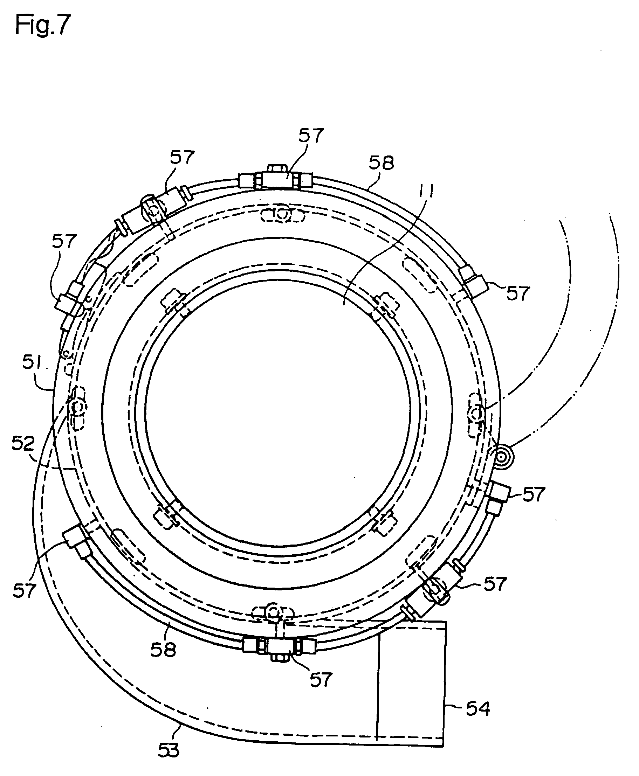

A third embodiment of the present invention will now be described with reference to Figs. 6 and 7. In these Figures, parts or components that are the same as or equivalent to those of the first embodiment are denoted by the same reference numerals as those used in the description of the first embodiment, and detailed description of such parts or components is omitted.

The face milling cutter of this embodiment features a cover 51 provided around the tool body 11 such that the tool body 11 is rotatable relative to the cover 51. A chip reservoir space R is formed between the inner peripheral surface of the cover 51 and the outer peripheral surface of the tool body 11, and a discharge opening 52 communicating with the chip reservoir space R is formed in the cover 51. In addition, an auxiliary chamber 53 is provided so as to communicate with the discharge opening 52. The auxiliary chamber 53 is formed so as to progressively expand radially outward along the circumference of the cover 51. The auxiliary chamber 53 has an open end which serves as a chip outlet 54.

A plurality of oil passage bores 55, each having a substantially L-shaped section, are formed in an end portion of the cover 51 at a suitable spacing in the circumferential direction, so as to open in the outer peripheral surface and the axial end surface of the cover 51. In the illustrated embodiment, there are eight such oil passage bores. A nozzle 56 is inserted into each oil passage bore 55. The nozzles 56 are connected to hoses 58 via connecting members 57, such that oil mist m is supplied to the nozzles 56 via the hoses 58.

In operation of the face milling cutter of the illustrated embodiment, chips generated by the cutting edges 13a, 13b and introduced into the chip reservoir space R are urged towards the inner peripheral surface of the cover 51 and are moved via the discharge opening 52 into the auxiliary chamber 53, and are finally discharged through the chip outlet 54.

The rotation of the tool body 11 produces a swirl that serves to induce air from the chip reservoir space R into the auxiliary chamber 53 and further to discharge the air from the chip outlet 54, whereby a negative pressure is maintained in the chip reservoir space R. Therefore, the oil mist m discharged from the end of the cover 51 is induced towards the inner peripheral surface of the cover 51 so as to be supplied to the surface of the workpiece w and the cutting edges 13a, 13b, without being scattered, thus achieving superior lubricating and cooling effects.

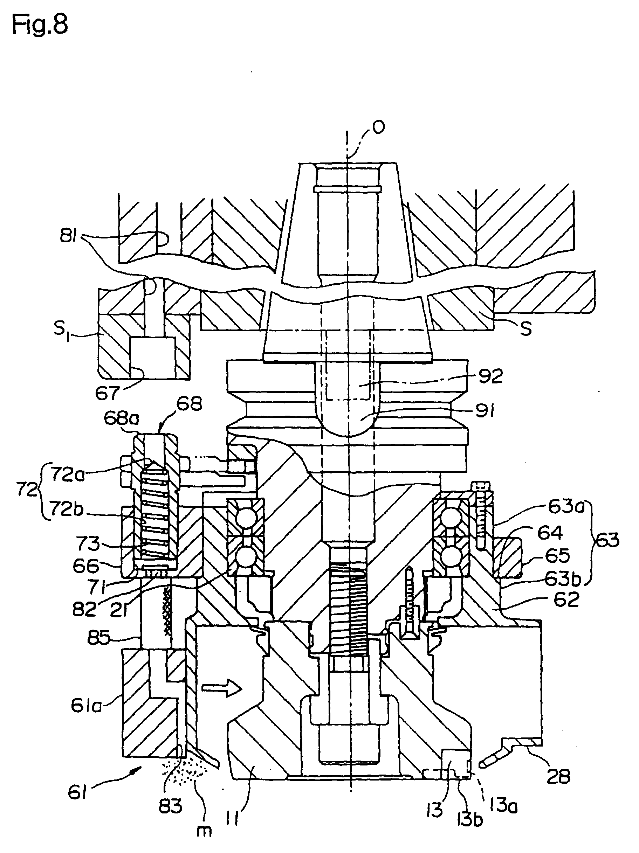

A description will now be given of a fourth embodiment of the present invention, with specific reference to Fig. 8. In Fig. 8, reference numerals that are the same as those used in the description of the first embodiment are employed to denote the parts or components that are the same as or equivalent to those of the first embodiment, and detailed description of such parts or components is omitted.

The chip receiver 61 used in this embodiment has a base end portion 62 which is to be connected to the outer peripheral surface of the bearing 21. The base end portion 62 has a cylindrical surface the axis of which coincides with the axis O of the tool body 11. The outer peripheral surface 63 has an upper peripheral surface portion 63a and a lower peripheral surface portion 63b. The upper peripheral surface portion 63a has an outside diameter slightly smaller than that of the lower peripheral surface portion 63b, whereby a step 64 is formed in the outer peripheral surface 63.

An annular block ring 65 is detachably fixed on the upper peripheral surface portion 63a. Part of the block ring 65 is expanded radially outward so as to provide an expanded portion 66 in which is mounted a locating pin (locating member) 68 that is engageable with a mating recess 67 formed in a spindle head S1.

More specifically, an insert hole 71 is formed in the expanded portion 66 so as to extend in parallel with the axis O, and the above-mentioned locating pin 68 is received in the hole 71 so as to be movable into and out of the hole 71. A through-hole 72 having a small-diameter upper portion 72a and a large-diameter lower portion 72b is formed in the locating pin 68. A spring 73 is loaded between the bottom of the insertion hole 71 and the upper end of the large-diameter lower portion 72b in the locating pin 68.

A communication hole 81 communicating with the aforesaid mist supplying device is formed in the mating recess 67 of the spindle head S1, so as to be supplied with the oil mist m. Thus, the oil mist m is supplied into the through-hole 72 in the locating pin 68, while the latter is received in the mating recess 67. A through-hole 82 is formed in the bottom of the insertion hole 71 which in turn is formed in the expanded portion 66.

In this embodiment, the chip receiver 61 is provided with an expanded portion 61a which diametrically opposes the connecting pipe 28. A hose 85 disposed between the expanded portion 61a and the expanded portion 66 of the block ring 65 provides a communication between an oil passage bore 83 formed in the expanded portion 61a and the aforementioned through-hole 82.

The oil passage bore 83 has a base end portion that extends coaxially with the through-hole 72 and the hose 85, but is flexed at a substantially mid portion along the axis so as to extend towards the axis of the chip receiver 61. The oil passage bore 83 is then flexed at a portion thereof facing the outer peripheral surface of the chip receiver 61, so as to extend again in the axial direction, along the outer peripheral surface of the chip receiver 61.

In the operation of the face milling cutter of this embodiment, the tool body 11 having an arbor 19 mounted thereon is chucked on the spindle S of a machine tool by means of an automatic tool exchanging device, typically a machining center. To this end, the locating pin 68 is positioned so as to be aligned with the mating recess 67 in the spindle head S1. Consequently, the arbor 19 is fitted in the spindle S, with the key 92 of the spindle S fitting in a keyway 91 formed in the arbor 19. At the same time, the end portion 68a of the locating pin 68 is received in the mating recess 67 of the spindle head S1.

Consequently, an oil passage is completed to include the communication hole 81, through-hole 72, hose 85 and the oil passage bore 83, whereby the oil mist m supplied by the mist supplying device is sprayed from the end of the chip receiver 61. Thus, the face milling cutter of this embodiment can be used without hampering the automatic operation of the automatic tool exchanging device, typically a machining center.

During the milling operation, air is discharged from the chip reservoir space R via the connecting pipe 28, by the effect of the swirl which is generated as a result of rotation of the tool body 11. Consequently, a reduced pressure is maintained inside the chip reservoir space R, so that the oil mist m discharged from the end of the chip receiver 61 is effectively induced towards the inner peripheral surface of the chip receiver 61. The oil mist m is therefore supplied to the surface of the workpiece w and the cutting edges 13a, 13b without being scattered, thus achieving excellent lubricating and cooling effects.

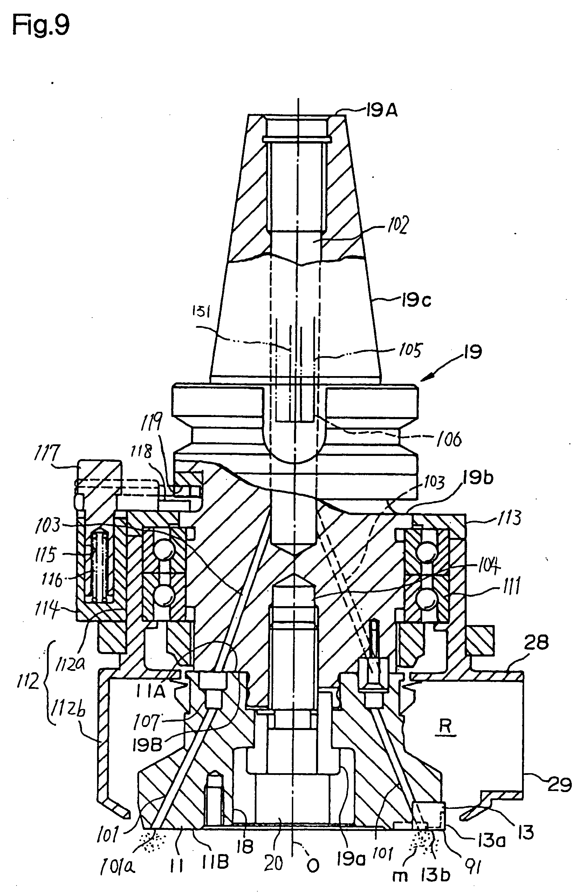

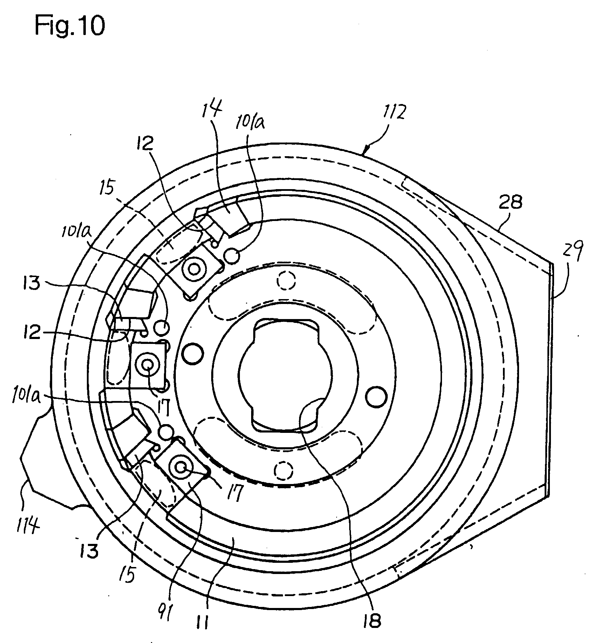

A description will now be given of a fifth embodiment of the present invention with reference to Figs. 9 and 10. In these Figures, parts or components that are the same as or equivalent to those of the first embodiment are denoted by the same reference numerals as those employed in the description of the first embodiment, and detailed description of such parts or components is omitted.

In this embodiment, a plurality of hook-shaped chip guide members 91 are disposed on the end of the tool body 11 at a suitable circumferential spacing, and are fixed thereto by means of countersunk screws 17. The tool body 11 is further provided with discharge bores 101 for discharging the oil mist m from the lower end thereof. The discharge bores 101 are disposed at a suitable circumferential pitch. The number of the discharge bores 101 is equal to the same of the tips 13. The discharge bores 101 are arranged to extend from the base end face 11A towards the lower end 11B in a diverging manner so as to progressively deviate from the axis O. The passage bores 101 terminate at the discharge openings 101a which open in the lower end surface 11B at positions near the tips 13.

The arbor 19 has a spindle-receiving bore 102 formed therein so as to extend from the base end surface 19A toward the large-diameter journal portion 19b. The arbor 19 further has communication bores 103 that extend from an end of the spindle-receiving bore 102 so as to open in the end surface 19B of the large-diameter journal portion 19b.

The spindle receiving bore 102 extends to a position near the end of a threaded bore 104 into which the fastening bolt 20 is screwed. A spline 106, which is formed at a substantially mid portion of the spindle-receiving bore 102, engages with the spindle 105 of the machine tool so as to prevent relative rotation of the spindle 105.

As in the case of the discharge bores 101, the communication bores 103 of the same number as the tips 13 are disposed at a circumferential spacing, and extend in such a diverging manner as to progressively deviate radially outward from the axis O towards the end surface 19B of the large-diameter journal portion 19b. The communicating bores 103 communicate with the discharge bores 103 via the respective stepped bores 107.

A bearing 111 is fixed to the large-diameter journal portion 19b of the arbor 19. A substantially cylindrical chip receiver 112 has an upper end portion 112a that fits on the outer race of the bearing 111. The upper end portion 112a is fixed by a bolt (not shown) to a cover 113 which in turn is fixed to the outer race of the bearing 111, whereby the tool body 11 is allowed to rotate relative to the chip receiver 112 about the axis O.

The upper end portion 112a of the chip receiver 112 has a radially outwardly expanded portion 114 which has a mating bore 115 opening in the upper end surface of the expanded portion 114. A locating pin 117 is slidably received in the mating bore 115 with a compression spring loaded therebetween.

The locating pin 117 is provided at its upper end portion with a locking portion 118 which projects towards the axis O so as to be engageable with a recess 119 formed in the outer peripheral surface of the arbor 19. The arrangement is such that, when the arbor 19 is not mounted on a machine tool, the locating pin 117 is lifted by the force of the spring 116 as shown in Fig. 9, so as to cause the locking portion 118 to engage with the recess 119, thereby preventing relative rotation between the arbor 19 and the chip receiver 112.

In the meantime, a lower end part 112b of the chip receiver 112 extends axially downward so as to cover the tool body 11 and the outer peripheral cutting edges 13b from the upper side, while forming chip reservoir space R between the inner peripheral surface thereof and the outer peripheral surface of the small-diameter portion of the tool body 11. The axial end portion of the lower end part 112b is bent radially inward such that the inside diameter of the bent end is slightly greater than the diameter of the rotational path circle of the outer peripheral cutting edge 13b. The chip reservoir space R is adapted to receive chips generated by the cutting edges 13a, 13b and introduced via the tip pockets 14.

A connecting pipe 28 that provides communication between the chip reservoir space R and the exterior of the chip receiver 112 is formed integrally with the lower end part 112b of the chip receiver 112. The connecting pipe 28 has an open end that serves as a chip discharge opening 29, whereby the chips are discharged in a fixed direction. The arrangement may be such that a sucking machine is connected to the open end of the connection pipe 28 through, for example, a duct hose, so as to induce air from the chip reservoir space R.

The spindle 105 has an axial central communication bore 131 extending along the axis O and opening in the lower end of the spindle 105. The communication bore 131 is adapted to be supplied with the oil mist m that is generated by the mist generating device. The oil mist m discharged from the discharge openings 101a opening in the end surface 11B of the tool body 11 is induced into the chip reservoir space R due to vacuum generated by the suction machine and by the rotation of the tool body 11, and is discharged from the chip outlet 29 together with the chips.

The face milling cutter of this embodiment has the construction described heretofore. In the state in which the arbor 19 has been mounted on the machine tool, the spindle 105 is received in the spindle receiving bore 102 of the taper shank portion 19c, while the locating pin 117 is received in a mating recess formed in a part of the machine tool so as to be pressed into the mating recess against the force of the spring 116. In this state, the locking portion 118 is disengaged from the recess 119, whereby the arbor 19 and, accordingly, the tool body 11 fixed to the arbor 19 are allowed to rotate relative to the chip receiver 112 which is held stationary by the machine tool.

At the same time, a passage for oil mist m is completed, including the communication bore 131 in the spindle 105, spindle receiving bore 102 of the taper shank portion 19c, the communication bores 103 formed in the large-diameter journal portion 19b, and the discharge bores 101 in the tool body 11, whereby the oil mist m coming from the oil mist supplying device is discharged from the end of the tool body 11.

The chips generated in the course of the cutting operation are collected in tip pockets 14 via the gaps formed between the rake surfaces of the tips 13 and the chip guide members 91, and are further introduced into the chip reservoir space R. The chips are then sucked and collected by the suction machine via the connection pipe 28, together with the oil mist m discharged from the discharge openings 101a.

In the face milling cutter of this embodiment, the oil mist m is supplied through the discharge passages 101 formed in the tool body 11 and is discharged from the discharge openings 101a which open at positions near the cutting edges 13a, 13b, whereby the oil mist m is stably supplied to the cutting edges 13a, 13b and the surface of the workpiece which is being machined, while any surplus oil mist is sucked and collected by the suction machine without being scattered to the environment, whereby excellent working performance is developed under a clean working environment.

Obviously, the third, fourth and fifth embodiments can have a suction machine connected to the connection pipe 28 via a duct hose 29 as in the case of the first embodiment, so that the suction of the oil mist m and the discharge of the chips are further promoted.

Chilled air of -30 °C to -40 °C may be directly jetted to the cooling object as the cutting medium in place of the oil mist m. It is also possible to form the oil mist by mixing a trace amount of cutting oil in such chilled air. When these cutting media are used, the cost incurred for the disposal of the waste oil can be substantially nullified, because the consumption of the oil is reduced substantially to zero. In addition, working performance equivalent or superior to that realized with the use of liquid cutting oil can be achieved under a clean working environment.

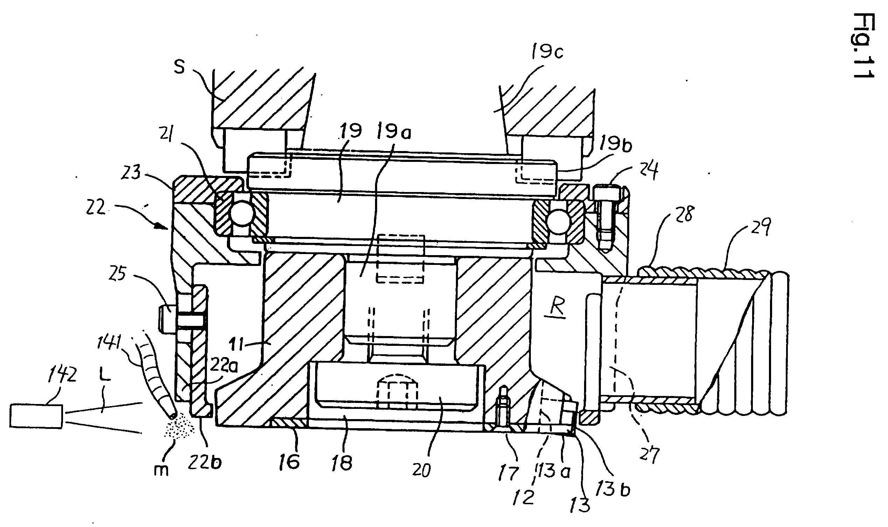

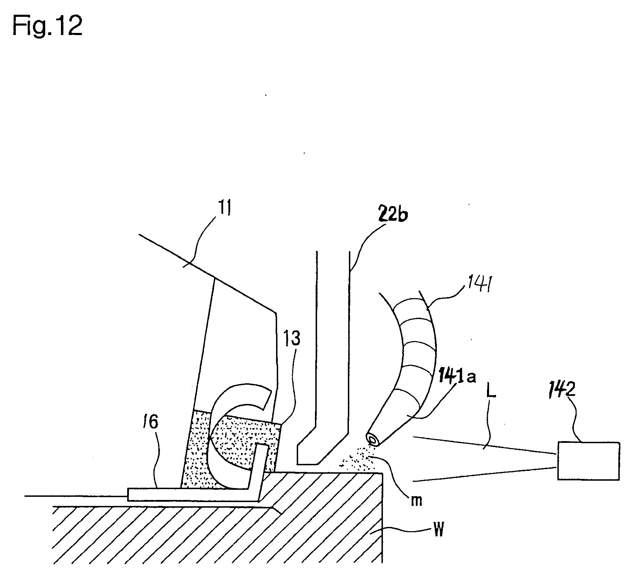

A sixth embodiment of the present invention will now be described with specific reference to Figs. 11 and 12. In these Figures, parts or components which are the same as or equivalent to those of the first embodiment are denoted by the same reference numerals as those employed in the description of the first embodiment, and detailed description is omitted with regard to such parts or components.

This embodiment is devoid of any passage bore 26 formed in the movable part 22b. Instead, a hose 141 is extended from the machine tool so as to be able to spray an oil mist m to a region near the end of the chip receiver 22. The aforesaid mist generating device is connected to the base end of the hose 141. Thus, the oil mist m is supplied during the machining.

The machining employing an oil mist has the following problem. Since the oil mist is formed by mixing a trace amount of cutting oil in a large volume of air, it is impossible to visually recognize the oil mist. Thus, it is often extremely difficult to check whether the oil mist is adequately supplied during the machining or whether the oil mist is aimed at the target position. Consequently, troublesome work is required to confirm the state of spraying the oil mist, or to correctly direct the oil mist to the target position.

The same problem is encountered also in the system that employs the chilled air as the cutting medium, because in such a system the chilled air of -30 °C to -40 °C is supplied directly or together with a small amount of cutting oil to form an oil mist.

In view of this problem, the face milling cutter of this embodiment employs, as shown in Figs. 11 and 12, a light projecting device 142 serving as visualizing means that projects infrared rays or other light rays L to a predetermined position, thereby visualizing the oil mist m supplied from nozzles 141a attached to the ends of the hoses. The light projecting device 142 is adapted to be turned on and off, i.e., switchable between light-emitting and non-emitting modes.

For the purpose of milling a workpiece w by means of the face milling cutter of this embodiment, the user sets the tool body 11 on the machine tool and fixes the workpiece w such that the surface of the workpiece to be machined lies normal to the axis of the spindle. Then, the nozzle 141a is aimed at the target region where the oil mist m is to be directed, i.e., to a region near the end of the chip receiver 22, and starts to spray the oil mist m while light rays L from the light projecting device 142 start to irradiate.

The light rays L impinging upon the oil mist is reflected in a random manner, so that the user can visually recognize the shot of the oil mist m. If the aim is deviated from the target region, the user can adjust the direction of the nozzle 141a so as to correct the locus of the oil mist m. The light projecting device is then turned off to stop the emission of the light rays L, whereby preparatory conditioning for the cutting operation is finished.

Then, the spindle or the working platform is moved in the direction of the axis of the spindle, thereby allowing the cutting tool to cut into the surface of the workpiece w, while the spindle or the working platform is moved in a direction which orthogonally crosses the axis of the spindle. Consequently, the surface of the workpiece w is cut by the face cutting edge 13a and the outer peripheral cutting edge 13b.

The chips generated as a result of the cutting are introduced into the tip pockets 15 while being guided through the gap between the rake surfaces of the tips 13 and the end surfaces of the hook-shaped projections 16a, and are further introduced into the chip reservoir space R, so as to be finally sucked and collected by the suction machine via the connection pipe 28 and the duct hose 29.

As will be understood from the foregoing description, this embodiment of the face milling cutter is arranged to apply light rays L to the sprayed oil mist m, thus causing random reflection of the light rays to enable easy visual check of the state of the spray of the oil mist m, as well as the reach of the same. This appreciably facilitates the adjustment of position and direction of the nozzle 141a prior to the cutting operation.

Projection of the light rays is suspended during the cutting operation, so that the operator is never dazzled by light rays which otherwise may be reflected in a random manner by the sprayed oil mist m. For the same reason, the operator can visually observe the state of the cutting without being hindered by the light rays.

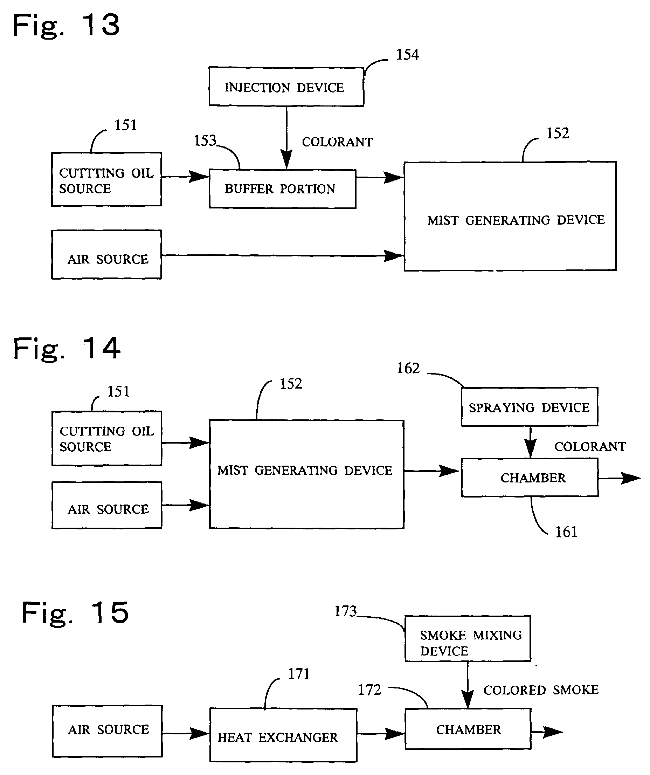

A description will now be given of a seventh embodiment of the present invention, with specific reference to Fig. 13. In this Figure, parts or components that are the same as or equivalent to those of the sixth embodiment are denoted by the same reference numerals as those used in the description of the sixth embodiment, and detailed description is omitted with regard to such parts or components.

This embodiment also employs visualizing means. In place of the light projecting device 142 used in the sixth embodiment, the seventh embodiment employs a coloring device which colors the cutting oil to enhance the visibility of the sprayed oil mist m.

More specifically, the visualizing means employs, as shown in Fig. 13, a buffer portion 153 interposed between a source 151 of the cutting oil and the mist generating device 152, and a colorant injection device 154 which injects a colorant into the buffer portion 153. The buffer portion 153 is capable of reserving a predetermined amount of the cutting oil. The cutting oil preserved in the buffer portion 153 is colored when the colorant is injected by the colorant injection device 154, and the cutting oil thus colored is sent to the mist generating device 152.

The colored cutting oil is atomized by the mist generating device 152 and is mixed with air to form a colored oil mist m that is discharged from the nozzle 141a. The state of spray, as well as the reach, of the oil mist can easily be recognized because the oil mist m is colored.

The visualizing means of this embodiment also serves to greatly facilitate the position adjustment of the nozzle 141a prior to the cutting operation. When the cutting operation is started, the oil mist m can be discolored as the injection of the colorant into the buffer portion 153 is stopped. This eliminates the necessity of an additional step of washing the colorant away from the workpiece w after the cutting.

A description will now be given of an eighth embodiment, with specific reference to Fig. 14. In this Figure, parts or components that are the same as or equivalent to those of the seventh embodiment are denoted by the same reference numerals as those employed in the description of the seventh embodiment, and the detailed description is omitted with regard to such parts or components.

This embodiment employs visualizing means that sprays an oil mist m together with an atomized colorant, thereby enhancing visibility of the oil mist m.

The visualizing means includes a chamber 161 disposed downstream of the mist generating device 152, and a spraying device 162 that atomizes a mist of a colorant into the chamber 161. An oil mist m generated by the oil mist generator 152 is introduced into the chamber 161. At the same time, the mist of colorant is sprayed by the spraying device 162 into this chamber 161, whereby the oil mist m and the mist of the colorant are mixed together. The mist mixture thus formed is sprayed from the nozzle 141a. Consequently, the mist of the colorant is sprayed together with the oil mist m, thus facilitating visual recognition of the state of the spray, as well as the reach, of the oil mist m.

The visualizing means of this embodiment also facilitates the position adjustment of the nozzle 141a conducted prior to the cutting operation. During the cutting operation, uncolored oil mist m alone can be sprayed as the supply of the mist of the colorant into the chamber 161 is stopped, whereby the necessity of the washing step is eliminated as in the case of the preceding embodiment.

A ninth embodiment of the present invention will now be described with reference to Fig. 15.

Chilled air is used as the cutting medium in this embodiment. This embodiment employs visualizing means that visualize the chilled air by mixing a colored smoke.

Air is supplied to a heat exchanger 171, and is chilled through a heat exchange with a refrigerant such as liquefied nitrogen, whereby chilled air of -30 °C to -40 °C is obtained. The visualizing means includes a chamber 172 disposed downstream of the heat exchanger 171 and a smoke mixing device 173 which generates a colored smoke and introduces the same into the chamber 172. The air chilled through the heat exchanger 171 is introduced into the chamber 172 to which supplied also is the colored smoke generated by the smoke mixing device 173, whereby the colored smoke is mixed with the chilled air. The mixture thus formed is discharged from the nozzle 141a, whereby the state of supply of the chilled air, as well as the reach of the same, can be visually recognized without difficulty.

The visualizing means of this embodiment also facilitates the position adjustment of the nozzle 141a conducted prior to the cutting operation. During the cutting operation, the chilled air alone can be sprayed as the supply of the colored smoke into the chamber 161 is stopped, whereby the necessity of the washing step is eliminated as in the case of the preceding embodiment.

## Claims

1. A cutting tool characterized by comprising a tool body having a cutting edge and rotatable about its axis, and cutting medium supplying means for supplying an atomized cutting oil or chilled air to a region near said cutting edge.

2. A cutting tool according to Claim 1, further comprising:
a chip receiver mounted coaxially with said tool body so as to cover the outer peripheral surface of said tool body in such a manner as to allow relative rotation between said tool body and said chip receiver;
said chip receiver having a chip discharge opening through which chips introduced into a space between the inner peripheral surface of said chip receiver and the outer peripheral surface of said tool body are discharged, said chip receiver further having at least one cutting medium discharge bore opening in an end thereof, for discharging the cutting oil in the form of a mist or chilled air.

3. A cutting tool according to Claim 1, further comprising:
a chip receiver mounted coaxially with said tool body so as to cover the outer peripheral surface of said tool body in such a manner as to allow relative rotation between said tool body and said chip receiver;
said chip receiver having a chip discharge opening through which chips introduced into a space between the inner peripheral surface of said chip receiver and the outer peripheral surface of said tool body are discharged;
said tool body having at least one cutting medium discharge bore opening in one end thereof at a location near said cutting edge, for discharging the cutting oil in the form of a mist or chilled air.

4. A cutting tool according to Claim 1, further comprising visualizing means for enabling visual recognition of the atomized cutting oil or the chilled air.

5. A cutting tool according to Claim 2,
wherein said chip receiver has a locating member engageable with a machine tool when said tool body is coupled to said machine tool;
said locating member having a through-hole formed therein, for guiding the mist of the cutting oil or the chilled air supplied from said machine tool to said cutting medium discharge bore thereby allowing said mist of cutting oil or said chilled air to be discharged through said cutting medium discharge bore.

6. A cutting tool according to Claim 2 or 5, wherein said cutting medium discharge bore has an open end directed towards said tool body.

7. A cutting tool according to one of Claims 2, 5 and 6, further comprising an anti-scattering member provided on the surface of said chip receiver having said open end of said cutting medium discharge bore at a position radially outside said open end of said cutting medium discharge bore, so as to extend axially from said surface of said chip receiver.

8. A cutting tool according to one of Claims 2, 5, 6 and 7, wherein a plurality of said cutting medium discharge bores are provided at a circumferential interval.

9. A cutting tool according to Claim 4, wherein said visualizing means serves to color said cutting oil.

10. A cutting tool according to Claim 4, wherein said visualizing means serves to mix a colorant with a mixture of the mist of the cutting oil and air.

11. A cutting tool according to Claim 4, wherein said visualizing means serves to project light rays on the mist of the cutting oil.

12. A cutting tool according to Claim 4, wherein said visualizing means serves to mix a colored smoke in the chilled air.

13. A cutting tool according to one of Claims 4, 9, 10, 11 and 12, wherein said visualizing means is switchable between an operative mode and inoperative mode.
